(19)

Europäisches Patentamt

European Patent Office

Office européen des brevets

(11) **EP 3 300 411 B1**

(12) **EUROPEAN PATENT SPECIFICATION**

(45) Date of publication and mention of the grant of the patent:
**12.12.2018 Bulletin 2018/50**

(51) Int Cl.:
**H04W 16/18** *(2009.01)* **H04W 16/22** *(2009.01)*
**H04W 24/02** *(2009.01)*

(21) Application number: **16189931.5**

(22) Date of filing: **21.09.2016**

(54) **DATA-DRIVEN ROLL-OUT PLANNING OPTIMIZATION METHOD**

DATENGETRIEBENE OPTIMIERUNGSMETHODE FÜR ROLLOUT-PLANUNG

MÉTHODE D'OPTIMISATION DE PLANIFICATION DE DÉPLOIEMENT BASÉE SUR LES DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.03.2018 Bulletin 2018/13**

(73) Proprietor: **Swisscom AG**
**3050 Bern (CH)**

(72) Inventors:
• **Scanferla, Damiano**
**3006 Bern (CH)**
• **Belanovic, Pavle**
**1007 Lausanne (CH)**

(74) Representative: **BOVARD AG**
**Patent- und Markenanwälte**
**Optingenstrasse 16**
**3013 Bern (CH)**

(56) References cited:
• FOURAT HAIDER ET AL: "Performance analysis of LTE-advanced networks in different spectrum bands", WIRELESS ADVANCED (WIAD), 2011, IEEE, 20 June 2011 (2011-06-20), pages 230-234, XP031928210, DOI: 10.1109/WIAD.2011.5983260 ISBN: 978-1-4577-0110-8
• HOLLAND OLIVER ET AL: "Management architecture for aggregation of heterogeneous systems and spectrum bands", IEEE COMMUNICATIONS MAGAZINE, IEEE SERVICE CENTER, PISCATAWAY, US, vol. 54, no. 9, 1 September 2016 (2016-09-01), pages 112-118, XP011623176, ISSN: 0163-6804, DOI: 10.1109/MCOM.2016.7565257 [retrieved on 2016-09-12]
• CMCC ET AL: "Performance Evaluation Methodology for Carrier Aggregation", 3GPP DRAFT; R4-091233_CA_METHODOLOGY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090330, 30 March 2009 (2009-03-30), XP050342010, [retrieved on 2009-03-30]

EP 3 300 411 B1

**Description**

Technical field

The invention relates to the field of roll-out planning for a mobile telecom carrier, and especially for a cellular network operator.

Background

Nowadays, bandwidth-consuming applications such as streaming services or data downloads are increasingly used by people on the go, in public places or when using public transportation means. Moreover, remote access solutions like VPNs (virtual private networks) for working purposes are also widely used by people travelling over long distances and/or at times when commuting to work, and they are keen to download a large amount of data at any possible time, including attachments to e-mails of sizes reaching several Megabytes each. As a result, increasing data traffic is generated over mobile networks, and both an extended coverage is required in order to allow for ubiquitous computing, as well as an improved network capacity to provide permanent reliable data communication.

For nomadic use, the Wireless LAN technology, also known as WLAN, is quite widespread to provide high-speed Internet access through a so-called Wi-Fi connection. This is the reason why every smartphone, tablet, and laptop are now fitted with such a wireless interface for Internet connectivity. Nevertheless, the reach of so-called "Hot-Spot" areas, where such type of connection is available, is limited to about a hundred meters at most, and in practice, reduced to a size of about 100 square meters indoors, due to the attenuation of delimiting walls and floors. Therefore, their use is restricted typically to hotels, restaurants, stores etc. Moreover, no handover is foreseen between neighboring areas, hence leaving no room for mobility support.

In contrast, large-scale mobile cellular networks, which were primarily intended for synchronous voice channel establishment, do provide such mobility support, but were hitherto not suitable for pervasive high-speed data connection. Now with the advent of new cellular technologies such as 3G and 4G like UMTS & LTE, showing far better bandwidth capabilities, both network coverage and capacity can be improved, and the paradigm of such mobile networks dramatically shifted from mere synchronous voice traffic support to enhanced coverage and further bandwidth provisioning for data traffic as well, as a complement to WLAN networks when these types of networks are available, and as an alternative thereto otherwise. Yet as a result, the capacity of these mobile networks is also challenged.

In order to keep up with the pace of that ongoing growing demand from customers, mobile network operators continuously roll out new network equipment, so that their expectations can be met. Yet the maximization of network capacity at the lowest possible cost is a very difficult exercise, since the most relevant incremental changes, such as adding a new base station, not only significantly impact coverage and capacity, but also of course simultaneously dramatically affect budget considerations, since these network elements and their related construction costs are the biggest capital expenditures. On the other hand, gathered practical experience from technicians to carry out more minor adjustments can prove to be little effective.

Hence, data-driven models for roll-out planning depending on current traffic data have been proposed, involving the leveraging of available network counter data and taking severe budget-constraint considerations into account.

Prior art is

- FOURAT HAIDER ET AL: "Performance analysis of LTE-advanced networks in different spectrum bands",WIRELESS ADVANCED (WIAD), 2011, IEEE, 20 June 2011 (2011-06-20), pages 230-234, XP031928210,DOI: 10.1109/ WIAD.2011.5983260ISBN: 978-1-4577-0110-8,
- HOLLAND OLIVER ET AL: "Management architecture for aggregation of heterogeneous systems and spectrum bands",IEEE COMMUNICATIONS MAGAZINE, IEEE SERVICE CENTER, PISCATAWAY, US, vol. 54, no. 9, 1 September 2016 (2016-09-01), pages 112-118, XP011623176,ISSN: 0163-6804, DOI: 10.1109/MCOM.2016.7565257,
- CMCC ET AL: "Performance Evaluation Methodology for Carrier Aggregation",3GPP DRAFT; R4-091233_CA_METHODOLOGY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090330, 30 March 2009 (2009-03-30), XP050342010.

The task of a predictive algorithm would be to determine how users are likely to be served for data traffic on a specific cell, i.e. over a particular carrier frequency, depending on the current numbers of users connected to it. This algorithm may first determine the amount of available physical resource blocks for such traffic, by excluding voice traffic, and then use a probability mass function modelling to assess what the achievable data throughput should be for users in the cell. Then, by computing a cumulative distribution function, and setting a lower throughput boundary for worst-served users, it may be ascertained whether these users are likely to be served with good quality according to the carrier's standards, and appropriate re-dimensioning measures are otherwise taken.

A predictive algorithm may become even more useful if it is capable of carrier aggregation (CA). The carrier aggregation technique is now quite widespread on new generation wireless technologies, and available among others on new 4G standards like LTE. Therefore, technical recommendations derived from such an algorithm for a sector comprising multiple cells may be improved, or at least will help to fully optimize any roll-out planning for upgrading the mobile network, because the proposed cell-based modelling may be more realistic for assessing how a new user would be actually served when he would like to connect to the mobile network at a given physical location.

There is hence a need for a roll-out planning method for a mobile network carrier, which is also capable of considering these developments, in particular carrier aggregation.

Summary

The present invention is aimed at offering a further optimized roll-out planning method for a mobile carrier supporting carrier aggregation and yielding data traffic predictions with improved accuracy.

Another goal of the present invention is to provide a further optimized roll-out planning method for a mobile carrier supporting a wider range of weighting parameters in order to better refine technical recommendations.

To this end, the present invention concerns a method for providing an optimized network roll-out plan for a mobile network comprising sectors fitted with multiple cells, each cell working over its own respective carrier frequency, the method comprising:

- a first step of gathering data from several network counters, followed by
- a data analysis step determining available network resources for data traffic, that further comprises a congestion detection substep using a probability mass function (PMF) and a cumulative distribution (CDF) modelling in order to assess what the achievable data throughput for a user present in said sector could be. The congestion detection substep further involves at least one carrier aggregation (CA) scenario between cells, and detects a congestion situation by comparing a predefined percentile of an aggregated CDF curve, weighted based on all possible cell connexion configuration probabilities, with a predefined minimal throughput level.

An advantage conferred by the claimed solution is that it may be used to include a broader range of modelling scenarios for assessing how users present at a physical location are served, now on a sector-by-sector basis, through an aggregated metric. As a result, the allowable data throughput for users present at a physical location is defined with better precision, the capacity adjustments being forecast in a coordinated way, while the fine tuning of each cell is still performed individually.

According to a preferred embodiment, the pain points are identified on a cell-by-cell basis depending on measured load-balancing features. This makes it possible to target improvements in a modular way for each sector when carrying out the roll-out planning.

According to another preferred embodiment, the pain points identified on the network based on load-balancing features between all available cells are then labelled as a coverage or a capacity issue. This makes it possible to prune all available technical solutions to only a relevant subset thereof, and hence to significantly ease the overall processing when carrying out the roll-out planning.

According to another preferred embodiment, classes of services corresponding to user profiles are defined based on subscription types, and an achievable throughput is computed for each user profile on each sector. As a result, the network dimensioning can perfectly match the traffic constraints according to the patterns derived on a profile-by-profile basis.

According to another preferred embodiment, the proposed roll-out planning method further involves a subsequent prioritization step depending on a sector value set by the mobile carrier as well as on the pain point severity. This prioritization step further helps refine and optimize the roll-out planning.

According to another preferred embodiment, the proposed roll-out planning method further involves a cost estimation step, including both capital and operational expenditures. This cost estimation step can be preferably performed after the prioritization step in order to validate the prescribed recommendations in view of predefined budget constraints, so that the overall total cost of ownership of the network is minimized in parallel.

According to another preferred embodiment, the proposed roll-out planning method further involves a traffic growth prediction scheme in order to fine-tune timelines for roll-out. When combined with a class-of-service differentiation scheme, e.g. depending on new subscription expectations by type, the timelines for roll-out can then also be adjusted depending on the distribution of the overall traffic growth with respect to user profile.

Hence, the proposed roll-out planning method efficiently uses counters of a mobile network in order to make recommendations on where, when, and which technology should be used in order to maximize the capacity of the monitored mobile network at the lowest possible cost.

Further advantageous features aimed at optimizing the roll-out of a mobile network are discussed in the following detailed description, with reference to the drawings illustrating preferred embodiments for the present invention. It will be understood that the advantageous features pertaining to each of these preferred embodiments can be taken alone or in combination for implementing the present invention.

Brief description of the drawings

The invention will now be described in greater detail with reference to accompanying figures, in which:

Figure 1 illustrates a sequence of steps of the proposed method for optimized roll-out planning according to a preferred embodiment for the present invention.

Figure 2a shows cumulative distribution function curves derived from network counters for each cell and the combination thereof in a carrier aggregation scenario with two cells, as well as the aggregated cumulative distribution function curve used for throughput threshold comparison and traffic congestion analysis.

Figure 2b shows the same cumulative distribution functions as on previous Fig. 2a, but now with an emphasis on the contribution of each cell for load-balancing analysis.

Detailed description

In a mobile cellular network, a physical location divided into one or more sectors is usually referred to as a site. Typically 3 sectors span over 120° each, in order to provide isotropic service capabilities. Each sector is then defined as a physical area around a site, that is covered by one or more cells, i.e. network elements serving a sector using a particular carrier and technology through one or more antenna elements.

In the following, a preferred roll-out planning optimization method will be described for a site involving the LTE technology (long term evolution, a 4G mobile standard) and two cells, working at a respective carrier frequency of 800MHz and 1800MHz, respectively, and having a bandwidth of 10 MHz and 20MHz, respectively, centered over their carrier center frequency. This preferred embodiment and all the features pertaining to it are however given by way of example only, and shall not be construed in a limiting manner; in particular, it will be appreciated in view of the following explanations that the formulas used by the proposed algorithm have also been extended to sectors comprising more than two cells, typically an additional third cell working at a carrier frequency of 2100MHz, and could also be further extended to a fourth cell working at a carrier frequency of 2600MHz, and so on, whereby carrier aggregation can then be performed on any of the available carrier frequencies, irrespective of the bandwidth available on each carrier frequency (NB: the center frequencies given by way of example for LTE are purely indicative, and the proposed algorithm would similarly work with any other center frequencies).

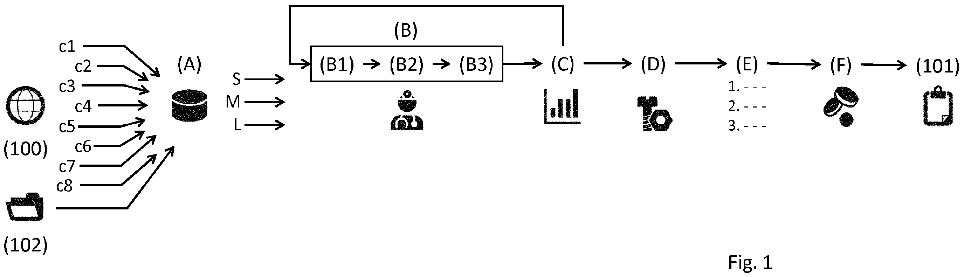

Figure 1 is a schematic diagram showing a preferred sequence of steps (A) to (F) for implementing the proposed method for optimized roll-out planning of the present invention, yielding an improved roll-out plan 101 for a mobile network 100, preferably a cellular mobile network 100. Since each sector of the mobile network periodically sends a set of counter data to its Operation Support System (OSS), the proposed method uses a subset of these counters supplying input parameters in a first data gathering step (A), and then processes them in a subsequent data analysis step (B) in order to assess what is the achievable throughput of users, on a sector-by-sector basis. In a first congestion detection substep (B1), it determines whether enough throughput would be available for worst-served users, according to the carrier's quality standards; then, in a further pain point identification substep (B2), pinpoints the cell that is concerned in the first place, whenever possible, and eventually, in a third so-called pain point classification substep (B3), the kind of problem occuring for this identified cell, i.e. whether it pertains primarily to capacity or coverage, is auxiliary set. When such a labelling as a coverage or a capacity issue is possible, the subsequent action recommendation step (D) is greatly simplified because non-relevant technical options are already pruned as an output of this analysis step (B).

Indeed, by way of example, possible actions that could be taken when congestion is detected can be chosen from among the following list:

- Install a new outdoor macro site in the area

- Add a new cell to the given sector

- Expand the bandwith on a given cell

- Add antenna elements

- Install a new indoor small cell in the area

- Install a new outdoor small cell in the area

- Perform load-balancing adjustment between existing cells in the given sector

Among all of these proposed technical options, some are essentially directed to coverage (e.g. the installation of a new indoor small cell) while others are essentially directed to capacity (e.g. adding a new cell on an existing sector), and therefore solutions solving one type of problem - labelled as coverage or capacity - can simply be ignored when it is sought to solve an issue of another type.

As a result, the subsequent prioritization step (E), depending e.g. on a sector value (e.g. train stations, where a lot of traffic is usually generated, and other similar critical places are very important for the reputation of mobile carriers in terms of quality of service) and the severity of the problem, depending on the level of scarcity of resources that has been estimated, is also simplified.

The optimal roll-out plan 101 is then yielded by taking into account budget constraints in terms of capital expenditures (also known as CAPEX, involving the acquisition of new network material, such as antennas, etc.) and operational expenditures (also known as OPEX, mainly directed to manpower and maintenance costs) in a last so-called cost estimation step (F). The budget is then divided up, starting from the top of the list where the most critical and urgent actions are to be found, downwards, until the budget is exhausted.

One aspect that has not been considered so far for optimizing the roll-out plan (101) is the setting and adjustment of deadlines. Indeed, so far, the data provided by the network counters are supposed to be present data, and therefore providing neither any historical perspective on the evolution of traffic, nor any extrapolating scheme in order to forecast how the network traffic will evolve on the short and mid-term. How to deal with timelines is precisely tackled in the growth prediction step (C), whose function is to extrapolate the network data typically over the next 6, 12 and 24 months; then, the data analysis step (B) and all of its substeps (B1, B2, B3) are reiterated, which allows deadlines to be set for the roll-out with a fine granularity, along with the best possible technical options at each stage. The reiteration of the data analysis step (B) is materialized, on Fig.1, by a feedback loop from the growth prediction step (C) back to the data analysis step (B). Preferred examples pertaining to the growth prediction scheme modelling are detailed later in this document in order to further optimize the roll-out planning.

In the following, reference is made to resource elements (REs), which correspond to a defined amount of time-frequency resources, as well as to physical resource blocks (PRBs), which correspond to a minimum allocable resource to a user, composed of a set of REs, and to channel quality indicators (CQI), that indicate the radio channel quality between the user and a given cell, by indicating the number of bits that can be sent per RE. The transmission time interval (TTI), set to 1 ms in LTE, corresponds to the minimum scheduling time for one user. The formulas defined here below are meant to implement the data analysis step (B) according to a preferred embodiment for the roll-out planning process for the invention, where the carrier aggregation (CA) technique, in which the user can combine the resources of two or more cells, is now taken into account for throughput estimation.

Still referring to Fig. 1, eight different network counters are used in order to provide data that will serve as input parameters for the algorithm implemented within the framework of the present invention:

1. A first counter $c_1$, counting the daily number of total available PRBs per TTI in a cell;

2. A second counter $c_2$, counting the daily number of total users in that cell;

3. A third counter $c_3$, counting the daily number of active users in the cell;

4. A fourth counter $c_4$, counting the daily number of used PRBs for VoLTE, i.e. voice over LTE;

5. A fifth counter $c_5$, counting average daily distribution of CQI;

6. A sixth counter $c_6$, counting the daily number of users that support CA and a certain number of secondary cells;

7. A seventh counter $c_7$, counting the daily number of users that are configured with a certain number of secondary cells among the ones supporting CA.

8. An eight counter $c_8$, counting the daily number of TTIs in which voice or data were required to be sent

The parameters used as inputs for running the algorithm employed by the roll-out planning method during this data analysis step are the following:

- $RE_{PRB}$ : the number of REs in one PRB. This parameter is set by the technology that is used;

- Total PRBs per TTI : the total number of available PRBs in a cell for one TTI, that is simply a function of the cell's bandwidth (e.g. 50PRBs/TTI for 10MHz, 100PRBs/TTI for 20MHz). This value is returned by the first counter $c1$;

- VoLTE PRBs : the number of PRBs in a cell that are used for VoLTE traffic. This input value is returned by the fourth counter c4, e.g. with the help of QCIs, i.e. Quality of Service (QoS) class identifiers. Indeed, usually voice traffic is heavily prioritized on a network since it is very sensitive to delay and jitter, and therefore assigned the highest possible priority (i.e.: QCI = 1). As a result, it is just necessary to measure the overall traffic tagged with this class of service, and more generally speaking, all possible classes of services pertaining to voice traffic (i.e. typically QCI 1 and 5).

- Total UEs : the total number of users in a cell. This input value is returned by the second counter c2;

- Active TTIs : the total number of TTIs in which data or voice was actually sent during the observation period - typically daily - hence disregarding the ones that ended up unused. This input value is returned by the eight counter $c8$;

- Active UEs per TTI : the average number of active users in a cell for one TTI, "active" meaning that data is in the process of being sent or is waiting to be sent to such users. This input value is obtained by dividing the value returned by the third counter c3 by the one returned by eight counter $c8$;

- CA non capable UEs : the number of users in a cell that do not support CA and can therefore only be connected to one cell at a time.

- CA capable UEs : the number of users in a cell that do support CA, with at least two cells as in the present example, but possibly with more cells (3,4...). This input value is returned by the sixth counter c6;

- CA capable & configured UEs : this is a subset of the number of users in a cell that support CA. It represents the numbers of users in the cell that are not only capable, but also configured, to use CA. This input value is returned by the seventh counter c7;

- CA capable not configured UEs : this input value is yielded by both previous counters c6 & c7as the number of users in a cell that are actually CA capable, but are not configured to use CA.

- $Thr_{RE}$ = the achievable throughput in bits for one RE, as a function of the CQI values (usually 16 for the LTE technology):

$$Thr_{RE}(q), \ \forall \, q \in \text{possible CQIs}$$

- Probability Mass Function (PMF) of the CQIs in a cell:

$$PMF_{CQI}(q) = Pr(CQI = q), \ \forall \, q \in \text{possible CQIs}$$

These input values are derived from the available data provided by the fifth counter c5.

In order to assess how users of a given cell $C_i$ are served, first the number of available PRBs for data per TTI in that cell is calculated, by excluding the voice traffic, as explained in formula (1) below:

$$Available \ data \ PRBs \ per \ TTI \ (C_i) = Total \ PRBs \ per \ TTI \ (C_i) - \frac{VoLTE \ PRBs(C_i)}{Active \ TTIs}$$

(1)

Then, the number of PRBs per TTI in the cell $C_i$ that a user currently present in cell $C_i$ can expect to use for data is computed as in formula (2) below:

$$Available\ data\ PRBs\ per\ TTI\ for\ a\ user(C_i) = \frac{Available\ data\ PRBs\ per\ TTI\ (C_i)}{Active\ UEs\ per\ TTI\ (C_i)} \qquad (2)$$

And finally, the PMF of the achievable throughput for users present in the sector using cell $C = C_i$ is derived, based on the value yielded by formula (2), by the formula (3) below, where the *Rt* parameter corresponds to a correction factor due to the fact that not all bits sent over the air are received correctly. *Rt* thus corresponds to the block error rate (BLER) rate and is usually estimated around 10%.

$$PMF_{Thr,C_i}(t) = \Pr(Thr = t) = \Pr(CQI = q)$$

$$(3)$$

where:
$t \in \{t(q,C_i), \forall\ q \in possible\ CQIs\}$

$$t(q, C_i) = (1 - Rt) * Thr_{RE}(q) * RE_{PRB} * Available\ data\ PRBs\ per\ TTI\ for\ a\ user(C_i) * Number\ of\ TTIs$$

In order to provide a more realistic estimation of the average throughput achieved by users present on a site whose sectors are fitted with multiple cells covering the same areas with different carriers, and not only a single cell $C_i$, the proposed roll-out planning method now incorporates CA in a new probabilistic modelling.

In the case of a sector with 2 cells $C_i$ and $C_j$, working respectively on a first carrier frequency *L*1 and a second carrier frequency L2, there are 3 possible configurations for a user:

(i) The user is connected to cell $C_i$ only
(ii) The user is connected to cell $C_j$ only
(iii) The user is connected to both $C_i$ and $C_j$, using CA.

The probability of a user in the sector being connected to cell $C_i$ only is given by the formula (4) below, corresponding to configuration scenario (i)

$$\Pr(Conf = C_i) = \frac{CA\ non\ capable\ UEs(C_i) + CA\ capable\ not\ configured\ UEs\ (C_i)}{Total\ UEs(C_i)} \qquad (4)$$

A similar formula (4) would apply, of course, to cell $C_j$ for configuration scenario (ii).

As far as configuration scenario (iii) is concerned, the probability of a user in the sector being connected to $C_i + C_j$ is given by the formula (5) below:

$$\Pr(Conf = C_i + C_j) = \frac{CA\ capable\ \&\ configured\ UEs\ (C_i) + CA\ capable\ \&\ configured\ UEs\ (C_j)}{Total\ UEs(C_i) + Total\ UEs(C_j)} \quad (5)$$

Further, the PMF of the achievable throughput for users in the sector using both cells $C_i$, $C_j$ is given by the formula (6) below:

$$PMF_{Thr,C_i+C_j}(t) = \sum_{(t_i,t_j)\in\{(t_i,t_j)|t_i+t_j=t\}} PMF_{Thr,C_i}(t_i) * PMF_{Thr,C_j}(t_j)$$

$$(6)$$

where:

$t_i \in \{t(q,C_i), \forall\ q \in possible\ CQIs\}$
$t_j \in \{t(q,C_j), \forall\ q \in possible\ CQIs\}$

The PMF of the achieved throughput for users in the sector corresponds to an aggregation of all the 3 possible configurations, hence providing a more accurate and realistic modelling according to the formula (7) below, which is actually a modified version of the formula (3) mentioned here above, now taking CA into account and the probability of each scenario yielded by previous formulas (4) and (5) as weights w.

$$PMF_{Thr,aggregated}(t) = \sum_{C \in \{C_i, C_j, C_i + C_j\}} \Pr(Conf = C) * PMF_{Thr,C}(t)$$

$$(7)$$

where:

$t \in \{t_i + t_j\}$
$t_i \in \{t(q,C_i), \forall q \in possible\ CQIs\}$
$t_j \in \{t(q,C_j), \forall q \in possible\ CQIs\}$

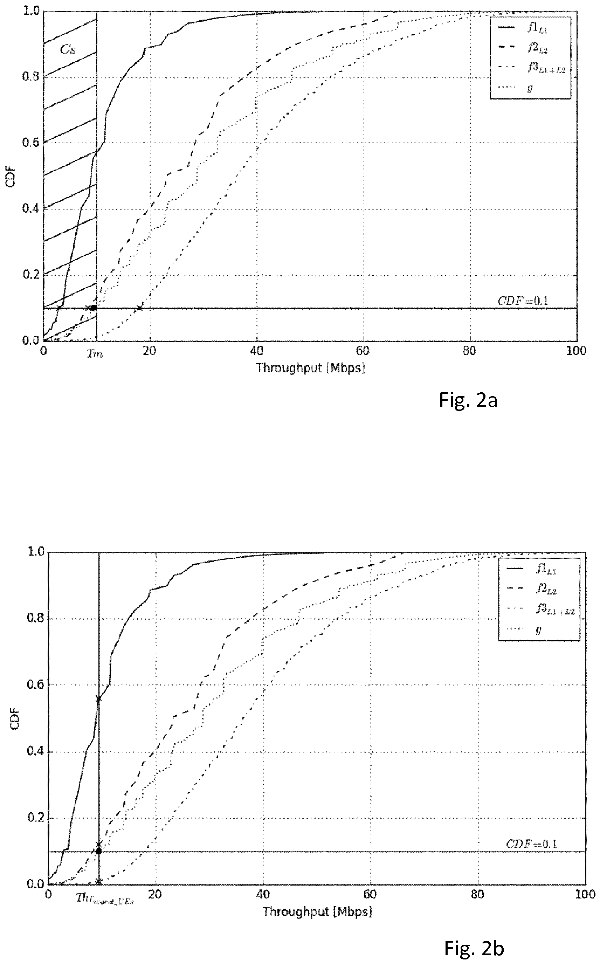

The throughput for some of the worst-served users in the sector is then defined as a low percentile $Pe$ of the PMF of the achievable throughput of all users in the sector, and recommendations are made accordingly if the values obtained are situated below a predefined minimal throughput level $Tm$, determining whether congestion occurs or not, as explained further in view of Fig. 2A discussed hereafter. In the preferred embodiment currently described, this low percentile $Pe$ is set to 0.1, i.e. 10%, as shown in the formula (9) below.

$$Thr_{worst\_UEs} = x \mid \sum_{t=0}^{x} PMF_{Thr,aggregated}(t) = 0.1 \quad (9)$$

Hence, since the Cumulative Distribution Function (CDF) of any of the PMF throughputs defined in formula (9) above is defined by formula (10) below:

$$CDF_{Thr}(x) = \sum_{t=0}^{x} PMF_{Thr}(t) \quad (10),$$

formula (9) can be reformulated as formula (11) below:

$$Thr_{worst\_UEs} = x \mid CDF_{Thr,aggregated}(x) = 0.1 \quad (11)$$

Turning now to Fig. 2A, showing CDF curves for expected throughputs computed according to the formulas above, a first curve f1 is depicted for a first cell $C_i$ working on a first carrier frequency $L1$ - typically 800MHz for LTE - a second curve $f2$ is depicted for a second cell $C_j$, working on a second carrier frequency $L2$ - typically 1800MHz for LTE - a third curve $f3$ corresponds to carrier aggregation between both $C_i$ and $C_j$, and finally a fourth so-called aggregated curve g, obtained by weighting of the first three curves by applying formula (7) and the weights $w$ of formulas (4) and (5).

By applying formula (11) to the aggregated curve g, the low-end throughput is obtained simply by detecting when a horizontal line corresponding to a CDF = 0.1 value crosses this aggregated curve g. This point is materialized by a bold black bullet, yielding, according to the depicted example, a throughput of 9.33 Mbps. In order to interpret this value, it is necessary to compare it with the predetermined minimal throughput level $Tm$, that is set, according to the illustrated embodiment, to 10 Mbps. Such a threshold value is considered to be reasonable for downloading data, and even for video streaming. A congestion situation $Cs$ can then easily be visualized by comparing the obtained low-end throughput value with this minimal throughput level $Tm$: if $Thr < Tm$, then congestion is detected. Thus, on Fig. 2A, congestion occurs, because the yielded low-end throughput value of 9.33 Mbps is indeed below the preset boundary of 10Mbps. According to other alternative embodiments, the minimal throughput level $Tm$ could be set to other threshold values, and the percentile also set to other ratios; it can be appreciated though that the lower the percentile value is chosen, together with the higher the value at which the minimal throughput level $Tm$ is set, the better service quality is ensured.

Still in Fig. 2A, the other throughputs for all other CDF curves $f1$, $f2$, & $f3$, indicated by crosses instead of a bullet, read respectively 2.93 Mbps, 8.84 Mbps, and 18.09 Mbps for a CDF value of 0.1, but yet do not have any meaning corresponding to a statistical modelling of the reality, unlike the one of 9.33 Mbps of the aggregated curve g, that corresponds to a low-end service scenario; these throughput values merely indicate what low-end throughput could have been reached for each of the scenarios (i), (ii) and (iii) taken independently.

The detection of a congestion situation Cs, by comparing the yielded low-end throughput value - here of 9.33 Mbps - indicated by the bold bullet point of Fig. 2A, with the minimal throughput level *Tm,* can be considered as the first congestion detection substep (B1) of the data analysis step (B) illustrated previously in Fig.1. Such a congestion situation *Cs* happens when the computed bold bullet point finds itself in the dashed zone located left of a vertical line corresponding to the minimal throughput level *Tm* depicted in Fig. 2A. Depending on the difference between the obtained low-end throughput of the aggregated curve g and the minimal throughput level *Tm,* or a ratio between these two values, a congestion level can also be determined, which may be helpful to prioritize actions to take in a subsequent step, such as the prioritization step (E) illustrated in Figure 1. In the present detailed example, the throughput of 9.33 is close to 10 Mbps, so that the congestion level is not dramatic. Should, in contrast, a throughput of 5 Mbps be returned by the calculation according to the proposed method, then the congestion level could have been considered as severe.

According to the preferred embodiment of the roll-out planning method for the present invention, the next substep of the data analysis step (B) is the pain point identification substep (B2), that is explained further in view of Fig. 2B and the following formulas (12), (13) and (14) below.

Indeed, the probability of 0.1 related to the $Thr_{worst\_UEs}$ is the sum of 3 contributions, one for each of the user configurations:

$$0.1 = \sum_{C \in \{C_i, C_j, C_i + C_j\}} contrib_C \qquad (12)$$

where each contribution is defined as follows:

$$contrib_{C_i} = \Pr(Conf = C_i) * CDF_{Thr, C_i}(Thr_{worst\_UEs})$$
$$contrib_{C_j} = \Pr(Conf = C_j) * CDF_{Thr, C_j}(Thr_{worst\_UEs}) \qquad (13)$$
$$contrib_{C_i + C_j} = \Pr(Conf = C_i + C_j) * CDF_{Thr, C_i + C_j}(Thr_{worst\_UEs})$$

The bold bullet point of aggregated curve g having a CDF of 0.1, that was visible in Fig. 2A and is also visible in Fig. 2B, is actually obtained by applying the weights w yielded by previous formulas (4) & (5) to curves *f1, f2,* and *f3.* The crosses that are visible in Fig. 2B indicate the CDFs values that are used by formula (13).

Then, a ratio rof the contributions of the 2 cells is then defined as follows:

$$r = \frac{contrib_{C_i}}{contrib_{C_j}} \qquad (14)$$

The pain point PP is determined according to the formula (15) below:

$$if\ r > b \rightarrow PP = C_i$$
$$if\ r < 1/b\ \rightarrow PP = C_j \qquad (15)$$
$$else \qquad \rightarrow PP = balanced$$

where the *b* parameter corresponds to a balancing ratio, here chosen to be equal to 1.25. In other words, if the ratio of contribution of the two cells $C_i$ & $C_j$ is comprised within 0.8 to 1.25, i.e close to 1, it is considered that both cells are equally affected by the congestion problem. Otherwise, it is possible to pinpoint which one of the two cells, $C_i$ and $C_j,$ is most affected. In other words, the pain point identification substep (B2) possibly indicates whether the congestion problem is balanced between cells, and otherwise, indicates which cell is most concerned. Therefore, as an outcome of this pain point identification substep (B2), it may already be possible to focus, at this stage, on measures to be taken for specific cells of each sector analysed during the subsequent action recommendation step (D).

If a specific cell can be identified during the pain point identification substep (B2), then a further advantageous classification substep (B3) of the data analysis step (B) is proposed according to the preferred embodiment described, in order to classify these pain points (PP) into subcategories, and further prune relevant technical options to solve the congestion issue to be considered during the subsequent action recommendation step (D).

In particular, if a paint point PP is not balanced and thus a given cell, e.g. cell $C_j,$ is concerned, the pain point classification substep (B3) determines whether the issue detected pertains to coverage or capacity as follows:

$$if \; \Pr\left(bad_{coverage}, PP\right) > Pcov \rightarrow PP - cov$$
$$else \qquad\qquad\qquad \rightarrow PP - cap \quad (16)$$

wherein the probability of a user in a cell to be indoor or at the cell edge is defined as:

$$\Pr\left(bad\_coverage, C_i\right) = \frac{CA \; capable \; not \; configured \; UEs(C_i)}{CA \; capable \; UEs(C_i)} \qquad (17)$$

In formula (17) above, the probability of a bad coverage is estimated by measuring the ratio between the number of users that could have potentially used CA on the concerned cell, but actually did not because of their radio conditions. This ratio is compared, in formula (16), with the *PCov* boundary percentage, typically set around 20%, in order to determine whether coverage (cov) or capacity (cap) is the most critical issue for the concerned pain point.

As a result, the paint point classification substep (B3) allows the labeling of the pain points (PP) as coverage or capacity problems by still involving carrier aggregation (CA) as a modelling parameter. The additional pruning of available technical options further simplifies the processing of the subsequent recommendation step (D). According to variant embodiments, the input parameter *b* (balancing ratio) used in pain point identification substep (B2) and *PCov* (boundary probability of a bad coverage) used in paint point classification substep (B3) could be adjusted to different levels, depending on how the filtering of the technical options is sought to be performed. The closer to 1 the balancing ratio *b* is set, the easier it becomes to pinpoint individual cells, and perform subsequent classification thereof; then, the higher the boundary probability of a bad coverage *Pcov* is set, the more the technical recommendations will be oriented toward capacity solving.

As already mentioned previously, despite the fact that the detailed example given for the data analysis step (B) further in view of Fig. 2A and 2B involves 2 cells working on two carrier frequencies only, the disclosed method could also be extended to scenarios involving additional cells working on other respective carriers, e.g. a third cell $C_k$ working on a third carrier frequency L3 - typically 2100MHz for LTE - and a fourth cell $C_l$ working on a fourth carrier frequency L4 - typically 2600MHz for LTE, and so on, using the same principles of CA.

Assuming that the multiplexing of a random number of carriers simultaneously is possible for a given technology supporting CA, i.e. also more than two at the same time, the scenarios for a sector having e.g. three cells using such a technology would then be:

(i) User connected to cell1 $C_i$
(ii) User connected to cell2 $C_j$
(iii) User connected to cell3 $C_k$
(iv) User connected to cell1+cell2 $C_i + C_j$
(v) User connected to cell1+cell3 $C_i + C_k$
(vi) User connected to cell2+cell3 $C_j + C_k$
(vii) User connected to cell1+cell2+cell3 $C_i + C_j + C_k$

The aggregated CDF curve would then be obtained by combining all of these CDFs with the corresponding weights of the probability of a configuration being one of these scenarios (i) to (vii), i.e. Pr(Conf = (i)-(vii)), by taking further inputs from additional network counters and adjusting the concerned formulas - e.g. (4) and (5). The congestion detection would then similarly be obtained by comparing whether the chosen percentile - typically 0.1 also - of the CDF aggregated curve is below the predefined minimal throughput level *Tm* - typically still 10Mbps.

Then, after having carried out this first congestion detection substep (B1), the trigger points for the pain point identification would be similarly set by calculating also the contributions of each cell as previously according to formulas (12), (13), and (14). Then, instead of only one ratio r, two ratios would be calculated, a first ratio between the contributions of cell1 and cell2 ($C_i$ & $C_j$), and a second ratio between the contributions of cell1 and cell3 ($C_i$ & $C_k$). Then, we use again the same thresholds 1.25 and 0.8 - i.e by applying the same values of balancing ratio *b* - in order to identify the trigger point. The pain point (PP) configuration can be as follows:

- one cell only is identified: when one cell's contribution is higher than the other 2. In this case, a subsequent classification substep (B3) can be further carried out in order to determine whether this identified cell is concerned primarily by a coverage or a capacity problem;
- two cells are identified: when two cells' contributions are higher than the third but balanced between them; in that case, two further computations are performed to simplify the decision-making process; and finally, as previously,
- a balanced situation when the contribution of all three cells is similar, in which case no further computation steps are undertaken.

The same principles and formula adjustments would be made for a four-carrier scenario, or more, for which, during the data analysis step (B), the same sequence of substeps (B1,B2,B3) would apply, the pain point classification step (B3) remaining subordinated to the outcome of the previous pain point identification substep (B2).

According to the preferred embodiment illustrated in Fig. 1, it would also be possible to consider, within the framework of the present invention, the subscription type of users in order to separate data flows and make distinct computations for each category of users. Indeed, some mobile carriers claim to offer various levels of maximum data throughputs depending on a subscription type (e.g. max. 1Mbps for a small package "S", 10Mbps for a medium package "M", and 30Mbps for a large package "L"); as a result, it would be unrealistic or even unfair to consider that all network resources should be equally distributed among all users, irrespective of their subscription category. Therefore, it is proposed, within the framework of the present invention, to map subscription categories to various classes of services in order to provide a differentiated network resources allocation scheme depending on these categories. For example, using LTE technology, voice-related traffic is always marked with QCI classes 1 and 5 irrespective of the QCI data class of the user. In the previous calculations, voice-related traffic was always removed from the available resources of the carrier before calculating the data throughput curves; then, the remaining resources, i.e. the resources available for data traffic - see e.g. formula (1) introduced earlier in this document - were divided equally among the active users, independently from any QCI data class. As a result, only one aggregated throughput curve was yielded per carrier. The idea behind arrows labelled "S", "M", and "L" in Fig. 1 is to indicate the possibility to separate data flows for each subscription type, by calculating one aggregated throughput distribution per QCI data class (e.g. class 9 mapped to subscription type "S", class 8 mapped to subscription type "M", and class 7 mapped to subscription type "L") so as to produce one low-end throughput value per each QCI data class. This way, the resources of the mobile carrier would be allocated to each QCI data class taking into consideration their priorities, making the provided statistical modelling for assessing expected throughput for a user in the sector even more realistic. It can even be appreciated that such a traffic modelling involving QoS class segmentation could be applied also for a single cell taken independently, and not necessarily for a sector having multiple cells, since this QoS segmentation is not subordinated to the use of any CA technology.

Such a modelling taking into account subscription types is further advantageous for additional reasons, a first one being that it makes it possible to adjust also the minimal throughput level *Tm* depending on each data class in order to further fine-tune the roll-out planning. Another essential advantage of considering subscription types when computing expected low-end throughputs is that it allows the calculations to be improved for growth prediction, and therefore also allows a better fine-tuning of the roll-out plan, especially concerning the timelines. Indeed, the number of users per subscription type may dramatically vary, so that a weighting according to the critical mass thereof may be highly relevant (e.g. usually the best sold subscription type is, by far, the medium "M") to extrapolate traffic growth predictions, on top of historical counter data that may be used to estimate trends, e.g. a linear growing rate of the number of active users at a rate X/week over a fixed time sliding window (e.g. the last 6 months or 12 months).

The prediction of future low-end throughput values in step (C) illustrated in Figure 1 can also be based on predictions of future counter values (here c1 to c8), while the prediction of future values of each counter is based on historical (past) values of that counter, from which a trend is derived. It is important to note that the analysis of historical values of counters can yield trends that are not necessarily linear: they could also be exponential, logarithmic, etc. Moreover, historical values of a counter include disruptions. Such disruptions can cause the estimation of the trend to be imprecise, or in extreme cases completely wrong.

There are two types of disruptions: temporary and permanent. Temporary disruptions are rare events that last for a limited period of time, during which the counter value is exceptional and uncharacteristic. Examples of temporary disruptions include the Christmas - New Year's period (stretching over about two weeks), summer holidays, usually spread over July and August, and the failure of a network element (lasting for a very limited period of time, for example, an hour). Permanent disruptions are, in contrast, fundamental changes in the network configuration that happen at a point in time and remain in that new state. Examples of permanent disruptions include the deployment of a new network element in the area, or the opening of a new shopping mall.

Both of these types of disruptions in the historical counter values can negatively affect the prediction step (C); therefore, according to a preferred embodiment, the prediction step (C) first detects, and then classifies, the disruption as being of one type or another, and then processes these disruptions in order to remove the effect thereof, thereby making the prediction results more precise.

According to yet another preferred embodiment, the processing of temporary disruptions involve that this type of disruption is partially or fully disregarded for prediction step (C). Partial disregarding means that the data samples that are considered to be affected by the temporary disruption are assigned a lower importance, and therefore weighted accordingly (e.g. by multiplying with a coefficient 0.2 instead of 1), while all the other samples having normal importance are not weighted. Full disregarding would mean that the weighting coefficient would be chosen as being equal to 0, so that the data samples affected by the temporary disruption would be completely ignored.

In constrast, permanent disruptions shall never be disregarded, and further set time boundaries to historical data analysis. Indeed, when a permanent disruption is detected in the historical values of a counter, the time when the permanent disruption happened preferably sets the time window from the present to an anterior time limit until which the analysis can go backwards in time. That means the data analysis to estimate the trend of the counter takes into consideration only the samples after the last permanent disruption, and yet not the ones before that disruption. As far as the growth prediction step (C) is concerned, not only QCI classes segmentation and the detection of disruptions may be useful, as explained in the previous paragraphs, but also the use of network equipment configuration data to make traffic growth predictions more precise. Indeed, in view of the network equipment configuration data, it is possible to determine the last time when a major configuration change (e.g. new carrier in the sector, new sector in the area, change in transmission power, etc.) occurred, and look back only since that major change as a starting point for trend estimation, hence making the data much more precise. These equipment configuration data are part of the further inputs returned by the so-called other data sources 102 represented on Fig. 1, in addition to the network counters.

It can also be appreciated that within the framework of the present invention, other relevant inputs supplied by these other data sources 102 represented in Fig. 1, like network- and user-generated events traces could be also leveraged in order to further optimize the roll-out planning process, on top of network equipment configuration data. Indeed, without event traces, all results calculated are related to the entire geographical area of a sector; hence, it is not possible to make statements or draw any conclusions about any particular part of a sector, only the sector as a whole. Using the user-generated events traces, which are events reported by each individual user, it would be possible to localize the results with a special focus on particular geographical areas within the sector, e.g. by applying trilateration algorithms. It would then be able to identify different types of hotspots as sub-pain points within the area of the sector, where additional small cells could be installed, for example.

Although the preferred embodiment of the described roll-out planning optimization method deals with a sector of an LTE cellular mobile network, the man with ordinary skill in the art will understand that this roll-out planning method could also be applied to any mobile network technology supporting the carrier aggregation technique, including other generation cellular networks, other carrier frequencies, and also possibly encompassing IEEE standards like WLAN, WiMAX, etc.

It will also be understood that the network counters used could be set to provide inputs other than daily rates, especially in order to adjust the network capacity to peak times, where e.g. 15-minute or hourly rates would be most appropriate.

Last but not least, it should be noted that instead of considering an achievable throughput of users present at a physical location, the proposed computing scheme, that is primarily intended to provide realistic throughput estimations and congestion detection assessment on a whole sector, in order to support roll-out planning, could also be applied to the calculation of a throughput for a new user entering this very same physical location without departing from the scope of the present invention. Indeed, only minor changes would be required for the first equations (1) & (2) in order to express the fact that it would then be sought to determine how new users are likely to be marginally served in view of existing resources available for data traffic, instead of computing an average between all current users in the sector.

### References list & acronyms

| | |
|---|---|
| A | Data gathering step |
| B | Data analysis step |
| B1 | Congestion detection substep |
| B2 | Pain point identification substep |
| B3 | Pain point classification substep |
| C | Growth prediction step |
| D | Action recommendation step |
| E | Prioritization step |
| F | Cost estimation step |
| | |
| | |
| b | Balancing ratio |
| C1 | 1st network counter |
| C2 | 2nd network counter |
| C3 | 3rd network counter |

(continued)

| | |
|---|---|
| **C4** | 4th network counter |
| **C5** | 5th network counter |
| **C6** | 6th network counter |
| **C7** | 7th network counter |
| **Ci** | Cell identifier |
| **f1** | First curve corresponding to a first carrier frequency |
| **f2** | Second curve corresponding to a second carrier frequency |
| **f3** | Third curve corresponding to both first & second carrier frequencies |
| **g** | Aggregate curve |
| **I1** | First carrier frequency |
| 12 | Second carrier frequency |
| **I3** | Third carrier frequency |
| **I4** | Fourth carrier frequency |
| **L** | "Large" subscription package |
| **M** | "Medium" subscription package |
| **Tm** | Throughput minimal level (preset by carrier) |
| **Cs** | Congestion situation |
| **Pe** | Low percentile of PMF used for calculations |
| **Pcov** | Lower boundary for the probability of a bad coverage |
| **q** | CQI value |
| **Rt** | Block error rate |
| **S** | "Small" subscription package |
| **w** | Weighting parameter |
| | |
| **100** | Mobile Network |
| **101** | Roll-out plan |
| **102** | Other data sources besides network counters |
| **CA** | Carrier aggregation |
| **Cap** | Capacity |
| **CDF** | Cumulative distribution function |
| **Cov** | Coverage |
| **CQI** | Channel quality indicator |
| **LTE** | Long-term evolution (4G mobile technology standard) |
| | |
| **PMF** | Probability mass function |
| **PP** | Pain point |
| **PRB** | Physical resource block |
| **QCI** | Quality of Service (QoS) Class Identifier |
| **RE** | Resource element |

(continued)

| Thr | Throughput |
|---|---|
| TTI | Transmission time interval |
| UE | User equipment |
| VoLTE | Voice over LTE |
| | |
| | |
| | |
| | |
| | |
| | |
| | |
| | |

**Claims**

1. Method for providing an optimized network roll-out plan (101) for a mobile network (100) comprising sectors fitted with multiple cells working over respective carrier frequencies, said method comprising:

   - a first step of gathering data (A) from several network counters, followed by
   - a data analysis step (B) determining available network resources for data traffic, wherein said data analysis step (B) further comprises a congestion detection substep (B1) using a probability mass function (PMF) and cumulative distribution (CDF) modelling in order to assess what the achievable data throughput for users present in said sector could be, wherein said congestion detection substep (B1) further involves at least one carrier aggregation (CA) scenario between cells, and detects a congestion situation (Cs) by comparing a predefined percentile of an aggregated CDF curve (g), weighted based on all possible cell connection configuration probabilities, with a predefined minimal throughput level ($Tm$).

2. Method for providing an optimized network roll-out plan (101) for a mobile network (100) according to claim 1, wherein said sectors comprise at least three cells ($C_i, C_j, C_k$), and wherein carrier aggregation (CA) technology is supposed to support the multiplexing of a random number of carrier frequencies.

3. Method for providing an optimized network roll-out plan (101) for a mobile network (100) according to any of the previous claims, wherein said data analysis step (B) further comprises a pain point (PP) identification substep (B2) aimed at identifying cells within the sector where congestion primarily occurs.

4. Method for providing an optimized network roll-out plan (101) for a mobile network (100) according to claim 3, wherein said pain point (PP) identification substep (B2) involves the comparison of at least one ratio ($r$) of contribution between cells with a balancing ratio (b).

5. Method for providing an optimized network roll-out plan (101) for a mobile network (100) according to claim 3 or 4, wherein, when said pain point (PP) identification substep (B2) identifies one single cell, said pain point (PP) identification substep (B2) is followed by a subsequent pain point classification substep (B3), determining whether said identified single cell is primarily affected by a coverage or a capacity issue.

6. Method for providing an optimized network roll-out plan (101) for a mobile network (100) according to claim 5, wherein said pain point classification substep (B3) computes a probability of a bad coverage, compares this calculated probability of a bad coverage with a predefined lower boundary probability ($PCov$), and derives a coverage or capacity issue labelling for said cell accordingly.

7. Method for providing an optimized network roll-out plan (101) for a mobile network (100) according to any of the previous claims, wherein said data analysis step (B) further computes different aggregate CDF curves according to different user profiles, wherein each user profile corresponds to a subscription type and each subscription type is mapped onto a specific class of service.

8. Method for providing an optimized network roll-out plan (101) for a mobile network (100) according to claim 7, wherein the technology used by said mobile carrier (100) is LTE and said class of service is a QCI class.

9. Method for providing an optimized network roll-out plan (101) for a mobile network (100) according to any of the previous claims, further comprising a growth prediction step (C) based on historical counter data.

10. Method for providing an optimized network roll-out plan (101) for a mobile network (100) according to claim 9, wherein said growth prediction step (C) further involves network equipment configuration data as input parameter.

11. Method for providing an optimized network roll-out plan (101) for a mobile network (100) according to claim 9 or 10, wherein said growth prediction step (C) further includes a disruption detection step based on the evolution of historical counter data, whereby said disruptions are subsequently classified as temporary or permanent, whereby temporary disruptions are at least partially disregarded, whereas permanent disruptions set time windows for trend estimations.

12. Method for providing an optimized network roll-out plan (101) for a mobile network (100) according to any of the previous claims, further comprising a subsequent step of action recommendation (D) including the listing of technical options, wherein said list of technical options is pruned according to the outcome of said data analysis step (B).

13. Method for providing an optimized network roll-out plan (101) for a mobile network (100) according to claim 12, further comprising a subsequent prioritization step (E) weighted by a valuation scheme and/or the congestion level.

14. Method for providing an optimized network roll-out plan (101) for a mobile network (100) according to any of the previous claims, further comprising a subsequent cost optimization step (F).

15. Method for providing an optimized roll-out plan (101) for a mobile network (100) according to any of the previous claims, **characterized in that** it further uses network- and user-generated events traces in order to refine localization information where congestion occurs.

**Patentansprüche**

1. Verfahren zum Bereitstellen eines optimierten Netzausbauplans (101) für ein Mobilfunknetz (100), welches Sektoren umfasst, passend zu multiplen Zellen, welche über entsprechende Träger-Frequenzen arbeiten, wobei das Verfahren umfasst:

- Einen ersten Schritt zum Sammeln von Daten (A) von einigen Netzschaltern, gefolgt von
- Einem Datenanalyseschritt (B), zum Ermitteln von verfügbaren Netzressourcen für Datenverkehr, wobei der Datenanalyseschritt (B) weiter einen Überlastungsermittlung-Teilschritt (B1) umfasst, welcher eine Wahrscheinlichkeitsmassenfunktion (PMF) und eine kumulative Verteilungsfunktion (CDF) verwendet, modelliert um zu bewerten, welches der verfügbare Datendurchsatz für Nutzer in dem Sektor sein könnte, wobei der Überlastungsermittlung-Teilschritt (B1) weiter zumindest ein Träger-Aggregation (CA) Szenario zwischen Zellen umfasst, und eine Überlastungssituation (Cs) erfasst durch Vergleichen eines vorbestimmten Perzentils der aggregierten CDF Kurve (g) gewichtet, basierend auf alle Zellverbindungs-Konfigurationsmöglichkeiten, mit einem vorbestimmten minimalen Durchsatzniveau (Tm).

2. Verfahren zum Bereitstellen eines optimierten Netzausbauplans (101) für ein Mobilfunknetz (100) gemäss Anspruch 1, wobei die Sektoren mindestens drei Zellen ($C_i, C_j, C_k$) umfassen, und wobei Träger-Aggregation (CA) Technik eingerichtet ist, um das Multiplexing von einer zufälligen Anzahl von Träger-Frequenzen zu unterstützen.

3. Verfahren zum Bereitstellen eines optimierten Netzausbauplans (101) für ein Mobilfunknetz (100) gemäss einem der vorhergehenden Ansprüche, wobei der Datenanalyseschritt (B) weiter einen Schwachpunkt (PP) Identifikationsteilschritt (B2) umfasst, welcher darauf zielt Zellen in dem Abschnitt zu identifizieren, bei denen Überlastung zuerst auftritt.

**4.** Verfahren zum Bereitstellen eines optimierten Netzausbauplans (101) für ein Mobilfunknetz (100) gemäss Anspruch 3, wobei der Schwachpunkt (PP) Identifikationsteilschritt (B2) den Vergleich von mindestens einem Verhältnis (*r*) der Verteilung zwischen Zellen mit einem Ausgleichsverhältnis (b) einbezieht.

**5.** Verfahren zum Bereitstellen eines optimierten Netzausbauplans (101) für ein Mobilfunknetz (100) gemäss Anspruch 3 oder 4, wobei der Schwachpunkt (PP) Identifikationsteilschritt (B2) eine einzelne Zelle identifiziert, wobei auf den Schwachpunkt (PP) Identifikationsteilschritt (B2) ein nachfolgender Schwachpunktklassifizierungsteilschritt (B3) folgt, welcher bestimmt ob die identifizierte einzelne Zelle zuerst durch eine Abdeckung oder ein Kapazitätsproblem beeinträchtigt ist.

**6.** Verfahren zum Bereitstellen eines optimierten Netzausbauplans (101) für ein Mobilfunknetz (100) gemäss Anspruch 5, wobei der Schwachpunktklassifizierungsteilschritt (B3) eine Wahrscheinlichkeit einer schlechten Abdeckung errechnet, die errechnete Wahrscheinlichkeit einer schlechten Abdeckung mit einer vorbestimmten niedrigeren Grenzwahrscheinlichkeit (*PCov*) vergleicht, und eine Abdeckung oder Kapazitätsproblem ableitet, um die Zelle entsprechend zu kennzeichnen.

**7.** Verfahren zum Bereitstellen eines optimierten Netzausbauplans (101) für ein Mobilfunknetz (100) gemäss einem der vorhergehenden Ansprüche, wobei der Datenanalyseschritt (B) weiter unterschiedliche Aggregat CDF Kurven berechnet, entsprechend unterschiedlicher Nutzerprofile, wobei jedes Nutzerprofil einem Subskriptionstyp entspricht und jeder Subskriptionstyp einer spezifischen Dienstklasse zugeordnet ist.

**8.** Verfahren zum Bereitstellen eines optimierten Netzausbauplans (101) für ein Mobilfunknetz (100) gemäss Anspruch 7, wobei die von dem Mobilträger (100) verwendete Technologie LTE ist und die Dienstklasse eine QCl Klasse ist.

**9.** Verfahren zum Bereitstellen eines optimierten Netzausbauplans (101) für ein Mobilfunknetz (100) gemäss einem der vorhergehenden Ansprüche, weiter einen Wachstumsprognoseschritt (C) umfasst, basierend auf historischen Zählerdaten.

**10.** Verfahren zum Bereitstellen eines optimierten Netzausbauplans (101) für ein Mobilfunknetz (100) gemäss Anspruch 9, wobei der Wachstumsprognoseschritt (C) ferner Netzausstattungskonfigurationsdaten als Input Parameter einbezieht.

**11.** Verfahren zum Bereitstellen eines optimierten Netzausbauplans (101) für ein Mobilfunknetz (100) gemäss Anspruch 9 oder 10, wobei der Wachstumsprognoseschritt (C) ferner ein Unterbrechungsdetektionsschritt umfasst, basierend auf der Entwicklung historischer Zählerdaten, wobei die Unterbrechungen nachträglich als temporär oder permanent klassifiziert werden, wobei temporäre Unterbrechungen zumindest teilweise unberücksichtigt sind, während permanente Unterbrechungen Zeitfenster setzen für Trendschätzungen

**12.** Verfahren zum Bereitstellen eines optimierten Netzausbauplans (101) für ein Mobilfunknetz (100) gemäss einem der vorhergehenden Ansprüche, weiter umfassend einen folgenden Schritt von Aktionsempfehlung (D), welcher die Listung von technischen Optionen umfasst, wobei die Liste der technischen Optionen gemäss dem Ergebnis des Datenanalyseschritts (B) bereinigt ist.

**13.** Verfahren zum Bereitstellen eines optimierten Netzausbauplans (101) für ein Mobilfunknetz (100) gemäss Anspruch 12, weiter einen folgenden Priorisierungsschritt (E) umfassend, gewichtet durch ein Validierungsschema und/oder dem Überlastungsniveau.

**14.** Verfahren zum Bereitstellen eines optimierten Netzausbauplans (101) für ein Mobilfunknetz (100) gemäss einem der vorhergehenden Ansprüche, weiter einen folgenden Kostenoptimierungsschritt (F) umfassend.

**15.** Verfahren zum Bereitstellen eines optimierten Netzausbauplans (101) für ein Mobilfunknetz (100) gemäss einem der vorhergehenden Ansprüche, **gekennzeichnet dadurch, dass** ferner Netz und Nutzer generierte Ereignisspuren verwendet werden, um Lokalisierungsinformation zu verfeinern, wo Überlastung auftritt.

**Revendications**

**1.** Méthode pour fournir une planification de déploiement de réseau optimisée (101) pour un réseau mobile (100) comprenant des secteurs équipés de multiples cellules fonctionnant sur des fréquences porteuses respectives, ladite méthode comprenant :

- une première étape de collecte de données (A) depuis plusieurs compteurs de réseau, suivie par
- une étape d'analyse des données (B) déterminant les ressources de réseau disponibles pour le trafic de données, ladite étape d'analyse des données (B) comprenant en outre une sous-étape de détection de saturation (B1) utilisant une modélisation basée sur des fonctions de masse (PMF) de probabilités et des fonctions de contribution cumulative (CDF) afin d'évaluer ce que pourrait être le débit de données réalisable pour les utilisateurs présents dans ledit secteur, ladite sous-étape de détection de saturation (B1) impliquant en outre au moins un scénario d'agrégation de porteuses (CA) entre les cellules, et détectant une situation de saturation (Cs) en comparant un centile prédéfini d'une courbe (g) de fonction de contribution cumulative agrégée, pondérée selon toutes les probabilités de configuration de connexion de cellules possibles, avec un niveau de rendement minimal prédéfini (Tm).

2. Méthode pour fournir une planification de déploiement de réseau optimisée (101) pour un réseau mobile (100) selon la revendication 1, dans laquelle lesdits secteurs comprennent au moins trois cellules ($C_i$, $C_j$, $C_k$), et dans laquelle la technologie d'agrégation de porteuses (CA) est censée supporter le multiplexage d'un nombre aléatoire de fréquences porteuses.

3. Méthode pour fournir une planification de déploiement de réseau optimisée (101) pour un réseau mobile (100) selon l'une des revendications précédentes, dans laquelle ladite étape d'analyse des données (B) comprend en outre une sous-étape d'identification (B2) de point douloureux (PP) visant à identifier les cellules du secteur où la saturation se produit principalement.

4. Méthode pour fournir une planification de déploiement de réseau optimisée (101) pour un réseau mobile (100) selon la revendication 3, dans laquelle ladite sous-étape d'identification (B2) de point douloureux (PP) implique la comparaison d'au moins un taux (*r*) de contribution entre les cellules avec un ratio d'équilibrage (b).

5. Méthode pour fournir une planification de déploiement de réseau optimisée (101) pour un réseau mobile (100) selon la revendication 3 ou 4, dans laquelle, lorsque ladite sous-étape d'identification (B2) de point douloureux (PP) identifie une seule cellule, ladite sous-étape d'identification (B2) de point douloureux (PP) est suivie d'une sous-étape de classification (B3) ultérieure de point douloureux (PP), déterminant si ladite seule cellule identifiée est affectée principalement par un problème de couverture ou un problème de capacité.

6. Méthode pour fournir une planification de déploiement de réseau optimisée (101) pour un réseau mobile (100) selon la revendication 5, dans laquelle ladite sous-étape de classification (B3) de point douloureux (PP) calcule la probabilité d'une mauvaise couverture, compare cette probabilité calculée d'une mauvaise couverture avec une probabilité de limite inférieure prédéfinie (*PCov*), et en déduit en conséquence une labellisation du problème en tant que problème de couverture ou problème de capacité pour ladite cellule.

7. Méthode pour fournir une planification de déploiement de réseau optimisée (101) pour un réseau mobile (100) selon l'une des revendications précédentes, dans laquelle ladite étape d'analyse des données (B) calcule en outre différentes courbes de fonctions de contribution cumulative agrégées selon différents profils d'utilisateur, dans lesquelles chaque profil d'utilisateur correspond à un type de souscription et chaque type de souscription est affecté à une classe spécifique de service.

8. Méthode pour fournir une planification de déploiement de réseau optimisée (101) pour un réseau mobile (100) selon la revendication 7, dans laquelle la technologie utilisée par ledit réseau mobile (100) est LTE et ladite classe de service est une classe QCI.

9. Méthode pour fournir une planification de déploiement de réseau optimisée (101) pour un réseau mobile (100) selon l'une des revendications précédentes, comprenant en outre une étape de prédiction de croissance (C) basée sur des données historiques de compteur.

10. Méthode pour fournir une planification de déploiement de réseau optimisée (101) pour un réseau mobile (100) selon la revendication 9, dans laquelle ladite étape de prédiction de croissance (C) implique en outre des données de configuration d'équipement de réseau en tant que paramètres de saisie.

**11.** Méthode pour fournir une planification de déploiement de réseau optimisée (101) pour un réseau mobile (100) selon la revendication 9 ou 10, dans laquelle ladite étape de prédiction de croissance (C) comprend en outre une étape de détection de ruptures basées sur l'évolution des données de compteur historiques, lesdites ruptures étant ensuite classifiées comme étant temporaires ou permanentes, les ruptures temporaires étant au moins partiellement ignorées, alors que les ruptures permanentes définissent des fenêtres temporelles pour des estimations de tendance.

**12.** Méthode pour fournir une planification de déploiement de réseau optimisée (101) pour un réseau mobile (100) selon l'une des revendications précédentes, comprenant en outre une étape ultérieure de recommandation d'action (D) comprenant le listage d'options techniques, ledit listage des options techniques étant réduit selon le résultat de ladite étape d'analyse des données (B).

**13.** Méthode pour fournir une planification de déploiement de réseau optimisée (101) pour un réseau mobile (100) selon la revendication 12, comprenant en outre une étape de priorisation ultérieure (E) pondérée par un schéma d'estimation et/ou le niveau de saturation.

**14.** Méthode pour fournir une planification de déploiement de réseau optimisée (101) pour un réseau mobile (100) selon l'une des revendications précédentes, comprenant en outre une étape ultérieure d'optimisation des coûts (F).

**15.** Méthode pour fournir une planification de déploiement de réseau optimisée (101) pour un réseau mobile (100) selon l'une des revendications précédentes, **caractérisée en ce qu'**elle utilise en outre des marqueurs d'événement générés par le réseau et les utilisateurs afin d'améliorer les informations de localisation où se produit la saturation.

Fig. 1

Fig. 2a

Fig. 2b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Performance analysis of LTE-advanced networks in different spectrum bands. **FOURAT HAIDER et al.** WIRELESS ADVANCED (WIAD), 2011. IEEE, 20 June 2011, 230-234
- Management architecture for aggregation of heterogeneous systems and spectrum bands. **HOLLAND OLIVER et al.** IEEE COMMUNICATIONS MAGAZINE. IEEE SERVICE CENTER, 01 September 2016, vol. 54, 112-118
- Performance Evaluation Methodology for Carrier Aggregation. **CMCC et al.** 3GPP DRAFT; R4-091233_CA_METHODOLOGY, 3RD GENERATION PARTNERSHIP PROJECT (3GPP). MOBILE COMPETENCE CENTRE, 30 March 2009